Europäisches Patentamt

European Patent Office

Office européen des brevets

(11) Veröffentlichungsnummer: **0 195 978**
**A1**

# (12) EUROPÄISCHE PATENTANMELDUNG

(21) Anmeldenummer: 86103303.3

(22) Anmeldetag: 12.03.86

(51) Int. Cl.⁴: **F28F 11/02** , F16L 55/07

(30) Priorität: 25.03.85 DE 3510745

(43) Veröffentlichungstag der Anmeldung:
01.10.86 Patentblatt 86/40

(84) Benannte Vertragsstaaten:
BE CH DE FR IT LI NL SE

(71) Anmelder: KRAFTWERK UNION
AKTIENGESELLSCHAFT
Wiesenstrasse 35
D-4330 Mülheim (Ruhr)(DE)

(72) Erfinder: **Weber, Robert**
Esperstrasse 23
D-8525 Uttenreuth(DE)
Erfinder: **Modlich. Erich, Dipl.-Ing.**
Regnitzstrasse 7
D-8550 Forchheim(DE)

(74) Vertreter: **Mehl, Ernst, Dipl.-Ing. et al**
Postfach 22 01 76
D-8000 München 22(DE)

(54) Rohrstopfen zum Verschliessen defekter Wärmetauscherrohre.

(57) Die Erfindung bezieht sich auf einen Rohrstopfen (4) zum Verschließen defekter Wärmetauscherrohre (2, 3) mit einem in seinem Außendurchmesser vergrößerbaren und dichtend gegen die Rohrinnenwand preßbaren Stopfenmantel (9). Bei instationären Betriebszuständen kann es passieren, daß solchermaßen verschlossene Wärmetauscherrohre vorübergehend undicht werden, geringe Mengen Primärmedium aufnehmen und dieses Primärmedium in den verschlossenen Wärmetauscherrohren einen, diese gefährdenden Überdruck erzeugen. Die Erfindung sieht hiergegen eine, den Rohrstopfen (4) in Längsrichtung durchdringende Druckentlastungsleitung (20, 24, 28 bis 32) vor, die mit einem, bei einem vorgegebenen Überdruck im Wärmetauscherrohr öffnenden Verschluß (21 bis 25) versehen ist. Zusätzlich kann ein federbelastetes Ventil (21 bis 25) in die Druckentlastungsleitung (32) eingesetzt sein. Ein erfindungsgemäßer Rohrstopfen ist insbesondere für den Einsatz zum Verschließen defekter Wärmetauscherrohre geeignet.

Rohrstopfen zum Verschließen defekter Wärmetauscherrohre

Die Erfindung bezieht sich auf einen Rohrstopfen zum verschließen defekter Wärmetauscherrohre mit einem in seinem Außendurchmesser vergrößerbaren und dichtend gegen die Rohrinnenwand preßbaren Stopfenmantel sowie mit einem vom Stopfenmantel umschlossenen Stopfenkern.

Bei Wärmetauschern insb. jedoch bei den an Druckwasserreaktoren angeschlossenen Dampferzeugern kann es im Laufe der Betriebszeit vorkommen, daß die Wanddicke der Wärmetauscherrohre durch Korrosion stellenweise so verringert wird, daß die rechnerisch dünnste zulässige Wanddicke unterschritten wird. Ist dieser Zustand erreicht, so wird das jeweilige Wärmetauscherrohr im Rahmen des Wartungsservice an seinen beiden Enden durch sogenannte Rohrstopfen, auch Dichtstopfen genannt, verschlossen. Hierzu sind Rohrstopfen bekannt, die in das Rohr eingesprengt oder hydraulisch wie auch mechanisch im Wärmetauscherrohr aufgeweitet werden, so daß sie dicht an der Innenwand des Wärmetauscherrohres anliegen. Ein solcher Rohrstopfen ist uns unter anderem durch die EP-PS 00 91 004 bekannt.

Es hat sich herausgestellt, daß auf diese Weise verschlossene Wärmetauscherrohre bei instationären Betriebszuständen, wie sie beim An-oder Abfahren von Dampferzeugern vorkommen, vorübergehend ihre ursprünglich hohe Dichtheit verlieren und daß dabei geringe Wassermengen zwischen Rohrstopfen und Rohrwand in das ansich verschlossene Wärmetauscherrohr eindringen können. Beim Betrieb des Wärmetauschers erwärmt sich dann dieses eingedrungene Wasser. Es kann dann im verschlossenen Wärmetauscherrohr durch seine Dichteänderung einen solch hohen Druck erzeugen, daß die Rohrwand des Wärmetauscherrohres platzt. Zwar ist auch in solch einem Fall durch die nach wie vor festsitzenden Rohrstopfen gewährleistet, daß kein dauernder Stoffaustausch zwischen der Primär-und Sekundärseite des Wärmetauschers erfolgt. Dennoch sind solche Vorgänge unerwünscht, da an diesen Wärmetauscherrohren beim An-oder Abfahren der Anlage jedesmal eine geringe Menge des Primärmedium, welches beim Kernkraftwerk kontiaminiert ist, in den Sekundärbereich gelangen kann.

Der Erfindung liegt daher die Aufgabe zugrunde, einen Weg zu weisen, wie die Gefahr der Verunreinigung bzw. Kontamination des Sekundärkreislaufes aus dem Primärkreislauf heraus bei Wärmetauschern vermindert werden kann.

Diese Aufgabe wird durch die Merkmale des Anspruches 1 gelöst. Vorteilhafte Weiterbildungen sind in den Ansprüchen 2 bis 4 beschrieben.

Infolge der Verwendung einer den Rohrstopfen in Längsrichtung durchdringenden Druckentlastungsleitung mit einem bei einem vorgegebenem Überdruck öffnenden Verschluß wird erreicht, daß im verschlossenen Wärmetauscherrohr keine unzulässigen Überdrücke gegenüber dem Sekundärkreislauf entstehen können und das Heizrohr nicht beschädigt wird. Hierdurch wird die Betriebszeit des Wärmetauschers, in der keinerlei Stoffaustausch bzw. Kontaminationsübertrag zwischen der Primär-und Sekundärseite stattfindet, beträchtlich verlängert.

In besonders zweckmäßiger Ausgestaltung der Erfindung kann ein federbelastetes Ventil in der Druckentlastungsleitung eingesetzt sein. Dies führt dazu, daß auch bei wiederholtem An-und Abfahren der Anlage gewährleistet ist, daß selbst in den Fällen in denen geringe Leckwassermengen in das verschlossene Wärmetauscherrohr eindringen sich dennoch kein unzulässiger Überdruck ausbilden kann und das Ausdehnungswasser wieder in den Primärkreislauf zurückgeführt wird.

Weitere Einzelheiten werden anhand eines in der Figur dargestellten Ausführungsbeispieles erläutert. Es zeigt:

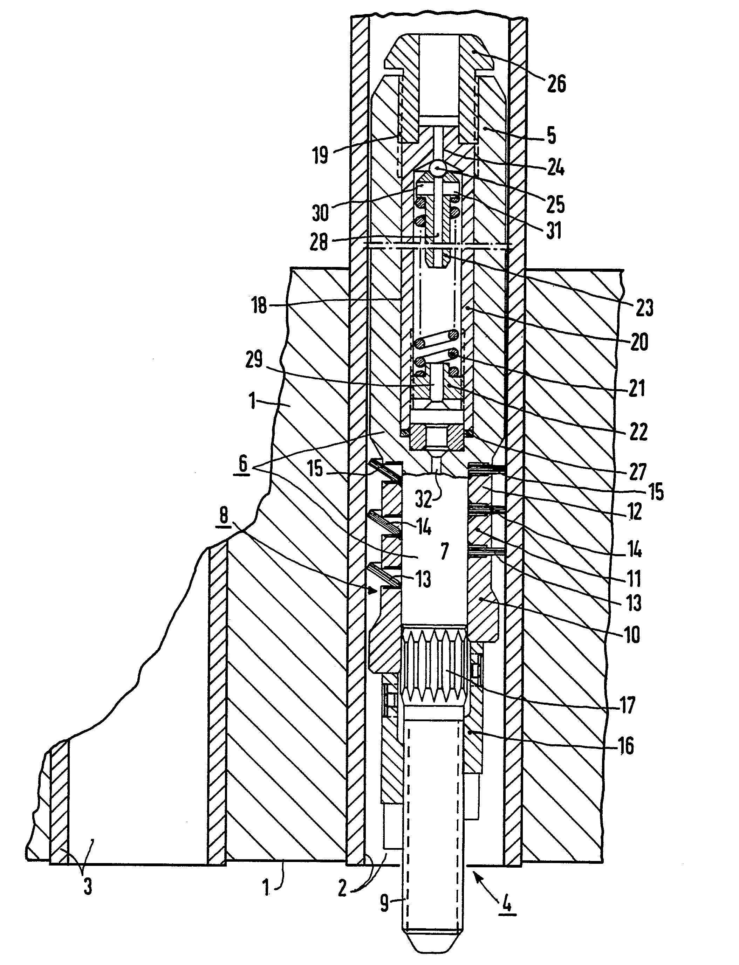

Fig. 1 einen Querschnitt durch einen Rohrstopfen mit einer eingebauten Druckentlastungsleitung und einem in der Druckentlastungsleitung eingebauten federbelasteten Ventil.

Die Figur zeigt einen Schnitt durch ein aufgebrochenes Stück des Rohrbodens 1 eines Wärmetauschers mit den darin eingeschweißten Enden zweier Wärmetauscherrohre 2, 3. In dem einen Wärmetauscherrohr 2 ist ein Rohrstopfen 4 eingesetzt gezeichnet. Er besteht aus einem sich in Einschubrichtung zu einem zylindrischen Kopf 5 verdickenden Stopfenkern 6 und einen diesen im Bereich seines Halses 7 umschließenden Stopfenmantel 8. Das freie Ende des Halses 7 des Stopfenkerns 6 trägt ein Gewinde 9. Der Stopfenmantel 8 besteht im Ausführungsbeispiel aus drei axialen aus dem Stopfenkern 6 verschiebbaren Stützringen 10, 11, 12 und zwischen den Stützringen bzw. dem letzten Stützring 12 und dem Kopf 5 des Stopfenkerns 6 aufgefädelten tellerfederartig gewölbten Stülpringen 13, 14, 15 sowie aus einer Haltemutter 16, die auf dem Gewinde 9 des Stopfenkerns 6 aufschraubbar und gegen den ersten Stützring 10 des Stopfenmantels zur Anlage bringbar ist. Der erste Stützring 10 ist über Nuten 17 auf dem Stopfenkern 6 verdrehungssicher aber längsverschiebbar gefügt. Die Stülpringe 13, 14, 15 sind in ihrem Außendurchmesser so gewählt, daß sie im entlasteten Zustand, wenn sie tellerfederförmig aufgewölbt sind, einen etwas geringeren Außendurchmesser haben als der Innendurchmesser des zu verschließenden Wärmetauscherrohres 2, 3. Auch der Außendurchmesser des Kopfes 5 des Stopfenkerns 6 ist so gewählt, daß er etwas kleiner ist als die lichte Weite des Wärmetauscherrohres 2, 3.

Der Kopf 5 des Stopfenkerns 6 trägt eine konzentrische Bohrung 18. Diese hat im Bereich des Kopfes 5 des Stopfenkerns einen größeren Durchmesser und trägt an ihrem Ende ein Innengewinde 19. In diesem Bereich der konzentrischen Bohrung 18 ist eine Druckentlastungshülse 20 eingesetzt, in der eine Druckfeder 21 zwischen einem Federlager 22 und einem Andruckteller 23 gespannt ist. Dabei ist zwischen dem Andruckteller 23 und einer konzentrischen Durchtrittsbohrung 24 im Boden der Druckentlastungshülse 20 eine Ventilkugel 25 eingesetzt. Sie wird durch den Andruckteller 23 gegen die Öffnung der Durchtrittsbohrung 24 gepreßt. Die Druckentlastungshülse 20 ist über ein im Kopf des Stopfenkerns aufschraubbaren Kopfkonus 26 gegen herausfallen gesichert. Sie wird von diesem gegen ein am Grund des großen Durchmessers der den Kopf des Stopfenkerns durchsetzenden konzentrischen Bohrung 18 sitzenden metallischen Dichtring 24 gepreßt. Der Andruckteller 23 und das Federlager 22 tragen beide Durchgangsbohrungen. Im Bereich des Ventiltellers ist diese Durchgangsbohrung an seitlich an der Ventilkugel 25 vorbeiführende Hilfsbohrungen 30, 31 angeschlossen.

Ist beispielweise ein korrosiv angegriffenes Wärmetauscherrohr 2 in einem Dampferzeuger eines Kernkraftwerks zu verschließen, so wird der dargestellte Rohrstopfen 4 in das offene Ende des im Rohrboden 1 des Dampferzeugers eingeschweißten Wärmetauscherrohres 2 über ein hier nicht dargestelltes Spannwerkzeug eingeschoben und gehaltert, so wie das im einzelnen bereits in der EP-PS 00 91 004 beschrieben ist. Nunmehr kann die Haltemutter mit diesem Spannwerkzeug relativ zum Gewindeschaft des Stopfenkerns verdreht, d.h. tiefer auf den Gewindeschaft aufgeschraubt werden, wodurch sie den Stopfenmantel 8 relativ zum Stopfenkern 6 in Richtung auf den Kopf 5 des Stopfenkerns zu verschiebt. Hierbei werden die Stützringe 10, 11, 12 und Stülpringe 13, 14, 15 aneinandergepreßt und die Stülpringe plangedrückt. Diese vergrößern dabei ihren Außendurchmesser, was dazu führt, das sich der Außenumfang der Stülpringe dichtend in die Innenwand des Wärmetauscherrohres eingräbt.

In ein solchermaßen an seinen beiden Enden mit jeweils einem Rohrstopfen verschlossenen Wärmetauscherrohr 2 kann das Primärmedium nicht eindringen, weil das Ventil sowohl durch den Druck des Primärmediums wie auch durch den Federdruck, mit dem die Ventilkugel 25 in die Durchtrittsbohrung 24 sich der Druckentlastungshülse 22 gepreßt wird, verschlossen gehalten wird. Entsteht aber im verschlossenen Wärmetauscherrohr doch einmal ein Überdruck gegenüber dem Primärmedium der einen durch den Federdruck vorgegebenen Differenzdruck übersteigt, so drückt dieser die Ventilkugel 25 entgegen der Kraft der den Andruckteller 23 beaufschlagenden Druckfeder 21 zurück. Das Ventil öffnet sich. Der Überdruck kann über die Druckdurchtrittsbohrung 24, die Druckentlastungshülse 20 und die Druckentlastungsleitung 32 in dem Bereich des Primärmediums entweichen. Hierdurch wird sichergestellt, daß im verschlossenen Wärmetauscherrohr 2 kein unzulässig hoher Überdruck entstehen kann. Der maximale Überdruck wird durch den Querschnitt der Durchtrittsbohrung 24 und dem Anpreßdruck der Ventilkugel 25 sowie den Druck des Primärmediums bestimmt.

Es wäre auch denkbar, eine Platzmembrane anstelle einer federbelasteten Ventilkugel in die Druckentlastungsleitung einzubauen. Eine solche Platzmembran würde jedoch beim erstmaligem Überschreiten des maximal zulässigen Druckes ansprechen, dann jedoch offen bleiben. Solange das Wärmetauscherrohr noch nicht durchkorrodiert ist, würde zwar auch dann noch kein Primärmedium in den Sekundärkreislauf eindringen können. Aber in den Fällen eines Lecks im Wärmetauscherrohr wäre mit einem zwar geringen aber ständigen Überströmen vom Primärmedium in den Sekundärkreislauf zu rechnen. In diesem Fall wäre es auch schwierig, bei Prüfungen die eine sekundärseitige Druckprobe verlangen, diese durchzuführen.

Schließlich wäre es auch möglich, den Rohrstopfen mit einem Gewinde zu versehen und auf dieses Gewinde wahlweise einen dichten Verschluß, eine Platzmembrane oder ein Überdruckventil aufzuschrauben. Besonders zweckmäßig wäre es, hierzu das am Rohrboden vorstehende Gewinde 9 des Stopfenkerns heranzuziehen. Aber auch das Innengewinde des Kopfes ließe sich hierzu verwenden. Hierdurch wird die Flexibilität beim Einsatz vergrößert.

Bezugszeichenliste

Rohrboden 1

Wärmetauscherrohr 2, 3

Rohrstopfen 4

zylindrischer Kopf 5

Stopfenkern 6

Hals 7

Stopfenmantel 8

Gewinde 9

Stützringe 10, 11, 12

Stülpringe 13, 14, 15

Haltemutter 16

Nuten 17

konzentrische Bohrung 18

Innengewinde 19

Druckentlastungshülse 20

Druckfeder 21

Federlager 22

Andruckteller 23

Durchtrittsbohrung 24

Ventilkugel 25

Kopfkonus 26

Dichtung 27

Durchgangsbohrung 28, 29

Hilfsbohrung 30, 31

Druckentlastungsleitung 32

## Ansprüche

1) Rohrstopfen zum Verschließen defekter Wärmetauscherrohre mit einem in seinem Außendurchmesser vergrößerbaren und dichtend gegen die Rohrinnenwand preßbaren Stopfenmantel sowie mit einem vom Stopfenmantel umschlossenen Stopfenkern,

**gekennzeichnet durch**

eine den Rohrstopfen (4) in Längsrichtung durchdringende Druckentlastungsleitung (20, 24, 28, 29, 30, 31, 32) mit einem bei einem vorgegebenem Überdruck im Wärmetauscherrohr öffnenden Verschluß (21,22,23,24,25).

2) Rohrstopfen nach Anspruch 1,

**dadurch gekennzeichnet,**

daß ein federbelastetes Ventil (21 bis 25) in die Druckentlastungsleitung (32) eingesetzt ist.

3) Rohrstopfen nach Anspruch 1,

**dadurch gekennzeichnet,**

daß eine Platzmembran in die Druckentlastungsleitung eingesetzt ist.

4) Rohrstopfen nach Anspruch 2,

**dadurch gekennzeichnet ,**

daß die Druckentlastungsleitung (32) eine den Stopfenkern - (6) zentrisch durchdringende Längsbohrung (24) umfaßt, die von einer durch einen federbelasteten Andruckteller (23) gegen die Öffnung der Längsbohrung gedrückten Ventilkugel (25) verschlossen gehalten wird.

5. Rohrstopfen nach Anspruch 1,

**dadurch gekennzeichnet,**

daß der Verschluß über ein Gewinde auf dem Rohrstopfen aufschraubbar ist.

6. Rohrstopfen nach Anspruch 5,

**dadurch gekennzeichnet,**

daß die Druckentlastungsleitung ein Gewinde trägt, auf das wahlweise der bei einem vorgegebenen Überdruck öffnende Verschluß oder eine dichtschließende Verschlußkappe aufschraubbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | EP-A-0 091 004 (KRAFTWEKR UNION) * Zusammenfassung; Figuren 1,2 * | 1-5 | F 28 F 11/02 F 16 L 55/07 |
| Y | GB-A-1 190 764 (SMITHS INDUSTRIES LTD.) * Seite 2, Zeilen 26-57; Figur 1 * | 1,2,4, 5 | |
| A | | 6 | |
| A | FR-A-2 491 185 (E. HENSTLER HYDRAULIC) * Seite 3, Zeile 32 - Seite 4; Figur 1 * | 4 | |
| Y | US-A-3 693 644 (DILORENZO) * Spalte 1, Zeile 43 - Spalte 2, Zeile 17; Figur 1 * | 3 | RECHERCHIERTE SACHGEBIETE (Int. Cl.4) |
| A | FR-A-2 353 769 (DIAMOND POWER SPECIALITY CO.) * Seite 3, Zeile 8 - Seite 4, Zeile 4; Figur 1 * | 1,2,4 | F 28 F F 16 L F 16 K |
| A | GB-A- 198 535 (HAWTHORN LESLIE) * Seite 1, Zeile 72 - Seite 2, Zeile 43; Figuren * | 1 | |

Der vorliegende Recherchenbericht wurde für alle Patentansprüche erstellt.

| Recherchenort DEN HAAG | Abschlußdatum der Recherche 24-04-1986 | Prüfer SMETS E.D.C. |
|---|---|---|